# EUROPÄISCHE PATENTSCHRIFT

(11) **EP 4 285 190 B1**
(45) Veröffentlichungstag und Bekanntmachung des Hinweises auf die Patenterteilung: **15.10.2025**
(21) Anmeldenummer: 22725734.2
(22) Anmeldetag: 25.04.2022
(51) Int. Cl.: G05B 19/042

(54) **KONTEXTUALISIERENDE EDITOREN IM ENGINEERING EINER PROZESSANLAGE**
CONTEXTUALISING EDITORS IN A PROCESS SYSTEM ENGINEERING SYSTEM
ÉDITEURS CONTEXTUALISANTS DANS L'INGÉNIERIE D'UNE INSTALLATION DE PROCESSUS

(30) Priorität: 29.04.2021 EP 21171285
(43) Veröffentlichungstag der Anmeldung: 06.12.2023
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2022/060933
(87) Internationale Veröffentlichungsnummer: WO 2022/229121

(56) Entgegenhaltungen:
- EP-A1- 2 902 857
- DE-A1- 10 348 564
- DE-A1- 102016 121 788
- DE-A1- 102018 114 592
- US-A1- 2017 293 418

## Beschreibung

Die Erfindung betrifft ein computerimplementiertes Projektierungswerkzeug für eine Projektierung einer Mehrzahl von Prozesskomponenten einer Prozessanlage, das ein erstes Teilwerkzeug und ein zweites Teilwerkzeug umfasst, wobei das erste Teilwerkzeug zur Erzeugung einer Automatisierung der Mehrzahl von Prozesskomponenten für die Prozessanlage ausgebildet ist, wobei das erste Teilwerkzeug dazu ausgebildet ist, im Rahmen der Automatisierung jeder Prozesskomponente eine Parametrierung und eine Interaktion mit weiteren Prozesskomponenten zuzuweisen, und wobei das zweite Teilwerkzeug zur Erzeugung einer Bedienung und Beobachtung für die Mehrzahl von Prozesskomponenten der Prozessanlage ausgebildet ist. Außerdem betrifft die Erfindung einen Engineering Station Server für ein Leitsystem einer Prozessanlag, ein Leitsystem für eine Prozessanlage und ein Verfahren zur Erzeugung einer Bedienung und Beobachtung einer Prozessanlage durch ein computerimplementiertes Projektierungswerkzeug.

Für die automatisierungstechnische Projektierung verfahrenstechnischer Anlagen spielt die Effizienz des Engineerings eine entscheidende Rolle. Die Effizienz im Engineering kann gemessen werden an:
- der Zeit die benötigt wird, Änderungen oder Erweiterungen einzubringen; und
- der systemischen Unterstützung im Hinblick auf Fehlervermeidung, um Zeitaufwände für Korrekturen zu vermeiden.

Eine zentrale Rolle hierbei spielen die Editoren im Engineering. Dabei ist insbesondere von Bedeutung, wie diese Editoren in einem integrierten Engineering bei Editoren-übergreifenden Aktionen, wie z.B. der Automatisierung einer Messstelle, miteinander interagieren. Im Rahmen einer Automatisierung einer Messstelle werden im Engineering zu Prozesskomponenten der Prozessanlage gehörige Prozessobjekte angelegt, deren verschiedene Facetten durch unterschiedliche Editoren projektiert werden.

Es ist bekannt, beim Anlegen neuer Messstellen zuerst die Automatisierungsfunktionalität (in einem CFC) zu projektieren, bevor die dafür notwendige Bedienung und Beobachtung in Anlagenbildern erzeugt wird.

Bei der Automatisierung einer Messtelle wird bei Verwendung eines Typ-Instanz basierten Engineerings eine Instanz eines Prozessobjekts (Baustein-Facette) in einem CFC angelegt ("Drag&Drop" des Prozessobjekt-Typs aus der Bibliothek in den CFC Plan) und Instanz-spezifisch
∘ mit anderen Prozessobjekten (im CFC oder CFC übergreifen) verschaltet,
∘ mit Signalen der Hardware (Aktoren und Sensoren) verschaltet
∘ mit kombinatorischer/mathematischer Logik (z.B. Signalveroderung) verschaltet, und
∘ parametriert (z.B. Reglerparameter).

Für die Bedienung und Beobachtung der Messstelle werden unterschiedliche grafische Repräsentanten des Prozessobjekts in Anlagenbildern angelegt, u.a.:
- Blocksymbole in unterschiedlichen Varianten (kompakt/detailliert): Hierfür muss bei bekannten Automatisierungslösungen das bereits instanziierte Prozessobjekt gesucht und (über "Drag&Drop") den jeweiligen Anlagenbildern zugeordnet werden.
- I/O Felder für die grafische Ausgabe einzelner Prozesswerte: Die I/O Felder werden bei bekannten Automatisierungslösungen (über "Drag&Drop") einer Bibliothek entnommen und dem jeweilige Anlagenbild zugeordnet (durch grafisches "Ziehen")
- der anzuzeigende Prozesswert muss dabei über so genannte "Object Picker" mit Suchmasken anhand des Namens des darzustellenden Prozesswertes und der assoziierten Prozessobjekt-Instanz gesucht werden.
- Trendanzeigen für die grafische Ausgabe des Verlaufs einzelner Prozesswerte: Trendanzeigen werden bei bekannten Automatisierungslösungen (über "Drag&Drop") einer Bibliothek entnommen und dem jeweiligen Anlagenbild zugeordnet (durch grafisches "Ziehen") - der anzuzeigende Prozesswert muss dabei über so genannte "Object Picker" mit Suchmasken anhand des Namens des darzustellenden Prozesswertes und der assoziierten Prozessobjekt-Instanz gesucht werden.

Wie beispielhaft beschrieben, sind bei bekannten Automatisierungslösungen zahlreiche und oftmals auch fehleranfällige Schritte notwendig, um neue Messstellen zu projektieren.

In der der DE 10 305 637 A1 ist eine Automatisierungslösung beschrieben, bei der in einer Engineering-Phase einer Prozessanlage Messstellen wie zuvor erläutert projektiert werden. Die DE 103 48 564 A1 offenbart Prozesssteuerung und-Überwachung , das intelligente Prozessobjekte und Prozessflussmodule verwendet, zur Automatisierung einer Prozessanlage, wobei die Prozessobjekte Parameter und Interaktionen mit anderen Komponenten zuweisen können und die Prozessflussmodule zur Laufzeit ausgeführt werden.

Die DE 10 2018 114592 A1 offenbart die Synchronisation von Konfigurationsänderungen in einer Prozessanlage, so dass Änderungen an Objekten und deren abhängigen Objekten effizient aktualisiert und während der Laufzeit synchronisiert werden, ohne den Online-Betrieb zu unterbrechen.

Die EP 2 902 857 A1 offenbart die Bereitstellung von Funktionen eines Automatisierungssystems, bei dem Funktionen durch Web-Anwendungen verfügbar gemacht werden, die an einer Client-seitigen Benutzerschnittstelle geknüpft und bereitgestellt werden.

Die DE 10 2016 121788 A1 offenbart ein Verfahren zum Konfigurieren einer Automatisierungsanlage, das das Bereitstellen eines nichtinstanziierten Automatisierungsmoduls in einer Bibliothek, das Abrufen des Moduls aus der Bibliothek, das Instanziieren des Automatisierungsmoduls und das Verorten des instanziierten Automatisierungsmoduls umfasst.

Der Erfindung liegt die Aufgabe zugrunde, ein computerimplementiertes Projektierungswerkzeug für eine Projektierung einer Prozessanlage anzugeben, das eine effiziente Automatisierung und Erzeugung einer Bedienung und Beobachtung der Prozessanlage ermöglicht.

Diese Aufgabe wird gelöst durch ein Computerimplementiertes Projektierungswerkzeug für eine Projektierung einer Mehrzahl von Prozesskomponenten einer Prozessanlage mit den Merkmalen des Anspruchs 1. Zudem wird die Aufgabe gelöst durch einen Engineering Station Server für ein Leitsystem einer Prozessanlage gemäß Anspruch 4. Zudem wird die Aufgabe gelöst durch ein Leitsystem für eine Prozessanlage gemäß Anspruch 5. Außerdem wird die Aufgabe gelöst durch ein Verfahren zur Erzeugung einer Bedienung und Beobachtung einer Prozessanlage durch ein computerimplementiertes Projektierungswerkzeug gemäß Anspruch 7. Vorteilhafte Weiterbildungen ergeben sich aus den abhängigen Ansprüchen.

Bei der Prozessanlage kann es sich beispielsweise um eine chemische, pharmazeutische, petrochemische oder eine Anlage aus der Nahrungs- und Genussmittelindustrie handeln.

Prozesskomponenten können beliebige Komponenten wie Sensoren oder Aktoren sein, die in der Prozessanlage miteinander und/oder mit übergeordneten, steuernden Komponenten der Prozessanlage kommunizieren und die für zur Erzeugung eines Produktes in der Prozessanlage verwendet werden.

Das erste Teilwerkzeug des computerimplementierten Projektierungswerkzeuges dient einem Projekteur der Prozessanlage zur Erstellung einer Automatisierung. Die Automatisierung an sich ist bekannt und umfasst wenigstens eine Parametrierung der Prozesskomponenten und eine Interaktion der Prozesskomponenten mit weiteren Prozesskomponenten.

Das zweite Teilwerkzeug greift auf die automatisierten Prozesskomponenten bzw. Prozessobjekte zu und erstellt eine dazugehörige Bedienung und Beobachtung. Bedienung und Beobachtung sind im Kontext einer Prozessanlage bekannt. Sie dienen der Überwachung und der Steuerung der Prozessanlage mit deren Prozesskomponenten durch Operatoren der Prozessanlage. Im Rahmen der Bedienung und Beobachtung werden üblicherweise graphische Repräsentationen der Prozessobjekte erzeugt und von geeigneten Visualisierungsmitteln den Operatoren dargestellt (Monitore, Smartphones, Tablets etc.).

Wie im einleitenden Teil beschrieben, ist das Zusammenspiel von erstem Teilwerkzeug und zweitem Teilwerkzeug bei bekannten computerimplementierten Projektierungswerkzeugen mühselig und mit beträchtlichem Aufwand für den Projekteur verbunden. Insbesondere bei Messstellen musste der Projekteur bislang mühsam von Hand der automatisierten Messstelle im Rahmen der Erzeugung der Bedienung und Beobachtung die notwendigen Eigenschaften zuweisen und die Parameter bzw. die Interaktionen mit anderen Prozessobjekten aus der Automatisierung von Hand übernehmen und der Messstelle für die Bedienung und Beobachtung zuweisen.

Das erfindungsgemäße Projektierungswerkzeug verringert den Aufwand für den Projekteur nun deutlich, indem die Übergabe der automatisierten Prozessobjekte zwischen den Teilwerkzeugen erfindungsgemäß ausgebildet ist. Hierdurch ist ein effizientes und fehlerfreies Projektieren einer Prozessanlage möglich.

Das computerimplementierte Projektierungswerkzeug ist dabei dazu ausgebildet, die automatisierte Prozesskomponente durch eine durch einen Projekteur der Prozessanlage triggerbare Verschiebeoperation, insbesondere eine grafische Ziehbewegung oder eine Kopieren- und Einfügen-Operation, dem zweiten Teilwerkzeug zur Verfügung zu stellen. Der Projekteur kann das in dem ersten Entwurfswerkzeug automatisierte Prozessobjekt beispielsweise mittels "Drag&Drop" dem zweiten Teilwerkzeug zuweisen. Dieses übernimmt die Parametrierung und die Interaktionen dann automatisiert und erstellt die Bedienung und Beobachtung dieses Prozessobjektes.

Auch ein "Copy&Paste" des automatisierten Prozessobjektes ist möglich.

Das zweite Teilwerkzeug kann dazu ausgebildet sein, dem Projekteur der Prozessanlage bei einer Übernahme der automatisierten Prozesskomponente eine Auswahloption darzubieten, derart, dass eine Ausprägung der automatisierten Prozesskomponente für die Bedienung und Beobachtung aus einer Mehrzahl von Möglichkeiten durch den Projekteur auswählbar ist. So kann dem Projekteur beispielsweise beim Integrieren einer automatisierten Messstelle eine Auswahloption dargeboten werden, die ihn zwischen den Ausprägungen "Trenddiagramm", "Spinnendiagramm" und "Punktdiagramm" auswählen lässt. Es kann aber auch vorgesehen sein, dass eine gebräuchlichste Ausprägung automatisch für die Bedienung und Beobachtung der zuvor automatisierten Prozesskomponente vorgesehen wird und dem Projekteur zusätzlich die Auswahloption dargeboten wird, damit er die Ausprägung ggf. einfach ändern kann.

Die zuvor formulierte Aufgabe wird zudem gelöst durch einen Engineering Station Server für ein Leitsystem einer Prozessanlage, auf dem ein Projektierungswerkzeug wie zuvor erläutert computerimplementiert ist.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der Prozessanlage geplant und verwaltet werden. Man spricht auch von einem "Engineering" oder einer "Projektierung" der Prozessanlage. Ein Beispiel für einen solchen Engineering Station Server ist ein SIMATIC Manager Server der Firma SIEMENS.

Die Aufgabe wird außerdem gelöst durch ein Leitsystem für eine Prozessanlage, das wenigstens einen Engineering Station Server und wenigstens eine Operator Station Server umfasst, wobei der Operator Station Server dazu ausgebildet ist, ein von dem auf dem Engineering Station Server computerimplementierten Projektierungswerkzeug erstellte Bedienung und Beobachtung der Prozessanlage zur visuellen Darstellung an wenigstens einen Operator Station Client zu übermitteln.

Unter einem Leitsystem wird im vorliegenden Kontext ein computergestütztes technisches System verstanden, das Funktionalitäten zum Darstellen, Bedienen und Leiten der Prozessanlage umfasst. Das Leitsystem kann neben dem Operator Station Server, dem Operator Station Client und dem Engineering Station Server beispielsweise auch sogenannte prozess- oder fertigungsnahe Komponenten umfassen, die zur Ansteuerung von Aktoren bzw. Sensoren dienen.

Unter einem "Operator Station Server" wird vorliegend ein Server verstanden, der zentral Daten eines Bedien- und Beobachtungssystems sowie in der Regel Alarm- und Messwertarchive des Leitsystems der Prozessanlage erfasst und Benutzern zur Verfügung stellt. Der Operator Station Server stellt in der Regel eine Kommunikationsverbindung zu Automatisierungssystemen (wie einem Automatisierungsgerät) der Prozessanlage her und gibt Daten der Prozessanlage an sogenannte "Operator Station Clients" weiter, die zur Bedienung und Beobachtung eines Betriebs der einzelnen Funktionselemente der Prozessanlage dienen.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der Prozessanlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Das Leitsystem kann einen ersten Engineering Station Server und einen zweiten Engineering Station Server umfasst, wobei das erste Teilwerkzeug auf dem ersten Engineering Station Server und das zweite Teilwerkzeug auf dem zweiten Engineering Station Server computerimplementiert sind. Es ist also nicht nötig, dass das erste Teilwerkzeug und das zweite Teilwerkzeug auf einem einzigen Engineering Station Server befinden. Gerade im Kontext von webbasierten Leitsystemen, die immer mehr an Bedeutung gewinnen, können die verschiedenen Teile des Projektierungswerkzeuges auf verschiedenen Serverinfrastrukturen implementiert sein.

Die zuvor formulierte Aufgabe wird zudem gelöst durch ein Verfahren zur Erzeugung einer Bedienung und Beobachtung einer Prozessanlage durch ein computerimplementiertes Projektierungswerkzeug, welches die folgenden Verfahrensschritte umfasst:
a) Erzeugung einer Automatisierung der Mehrzahl von Prozesskomponenten für die Prozessanlage durch ein erstes Teilwerkzeug des computerimplementierten Projektierungswerkzeug, wobei das erste Teilwerkzeug im Rahmen der Automatisierung jeder Prozesskomponente eine Parametrierung und eine Interaktion mit weiteren Prozesskomponenten zuweist,
b) Zurverfügungstellung der automatisierten Prozesskomponente mit deren Parametrierung und deren Interaktion mit weiteren Prozesskomponenten für ein zweites Teilwerkzeug des computerimplementierten Projektierungswerkzeug durch das erste Teilwerkzeug,
c) Erzeugung einer Bedienung und Beobachtung für die Mehrzahl von Prozesskomponenten der Prozessanlage durch das zweite Teilwerkzeug auf Basis der von dem ersten Teilwerkzeug erhaltenen automatisierten Prozesskomponenten.

Das Verfahren ist erfindungsgemäß dadurch gekennzeichnet, dass das erste Teilwerkzeug die automatisierte Prozesskomponente mit deren Parametrierung und deren Interaktion mit weiteren Prozesskomponenten dem zweiten Teilwerkzeug jeweils derart zur Verfügung stellt, dass das zweite Teilwerkzeug keine Anpassungen an der automatisierten Prozesskomponente vornehmen muss, um sie in die Bedienung und Beobachtung der Mehrzahl von Prozesskomponenten der Prozessanlage zu integrieren.

Dabei kann, in analoger Weise wie zuvor beschrieben, die automatisierte Prozesskomponente dem zweiten Teilwerkzeug durch eine durch einen Projekteur der Prozessanlage triggerbare Verschiebeoperation, insbesondere eine grafische Ziehbewegung oder eine Kopieren- und Einfügen-Operation, zur Verfügung gestellt werden.

Im Rahmen einer vorteilhaften Weiterbildung der Erfindung bietet das zweite Teilwerkzeug einem Projekteur der Prozessanlage bei einer Übernahme der automatisierten Prozesskomponente eine Auswahloption dar, derart, dass eine Ausprägung der automatisierten Prozesskomponente für die Bedienung und Beobachtung aus einer Mehrzahl von Möglichkeiten durch den Projekteur auswählbar ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: eine Nutzeroberfläche eines ersten Teilwerkzeugs eines computerimplementierten Projektierungswerkzeugs;
- FIG 2: eine Nutzeroberfläche eines zweiten Teilwerkzeugseines computerimplementierten Projektierungswerkzeugs; und
- FIG 3: eine schematische Darstellung eines Engineering Station Servers.

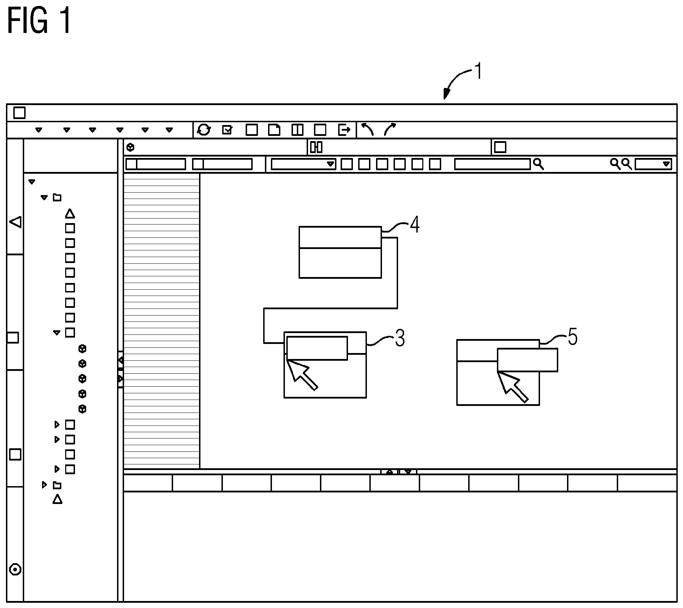

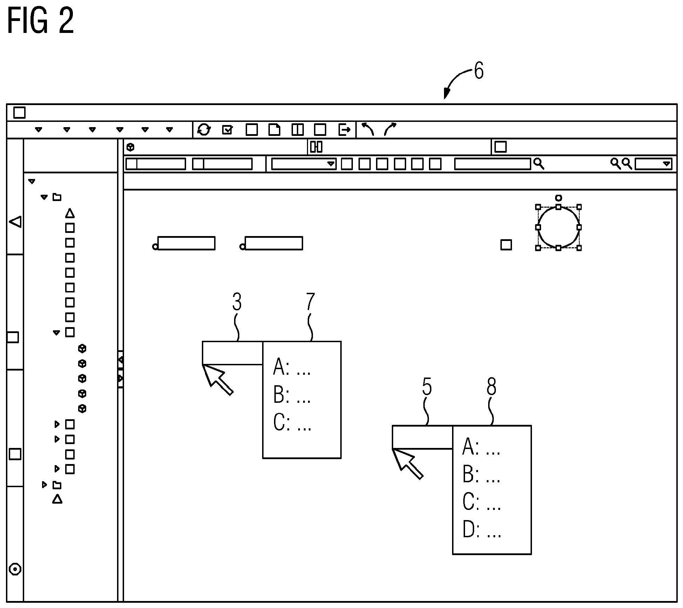

In FIG 1 ist eine Nutzeroberfläche eines ersten Teilwerkzeugs 1 eines computerimplementierten Projektierungswerkzeugs dargestellt. Ein erstes Prozessobjekt 2, das von einem Projekteur automatisiert wurde, stellt ein Signal 3 an einer Schnittstelle eines Funktionsbausteins 4 einer beliebigen Komponente einer Prozessanlage dar. Als ein zweites Prozessobjekt 5 wird ein Funktionsbaustein einer weiteren beliebigen Komponente der Prozessanlage betrachtet. Wechselt der Projekteur mit den kopierten oder per Maus festgehaltenen Prozessobjekten 2, 5 auf eine in FIG 2 dargestellte Nutzeroberfläche eines zweiten Teilwerkzeugs 6, so kann der Projekteur die kopierten Prozessobjekte 2, 5 einfach platzieren ("Paste" oder "Drop").

Dabei wird dem Projekteur für das erste Prozessobjekt 2 eine erste Auswahloption 7 (gekennzeichnet durch "A:...", "B:..." und "C:...") dargeboten, mit deren Hilfe der Projekteur eine Ausprägung des Prozessobjektes 2 in der Bedienung und Beobachtung auswählen kann. Für das Signal 3 des Funktionsbausteins 4 sind mögliche Ausprägungen beispielsweise "I/O-Felder", "Trendanzeigen" oder "Punktdiagramme".

Für das zweite Prozessobjekt 5 wird dem Projekteur eine zweite Auswahloption 8 (gekennzeichnet durch "A:...", "B:...", "C:..." und "D:...") dargeboten, mit deren Hilfe der Projekteur eine Ausprägung des zweiten Prozessobjektes 5 in der Bedienung und Beobachtung auswählen kann. Für den Funktionsbaustein 5 können als Ausprägung beispielsweise "Blocksymbolvariante" oder "Balkendiagramm" dargeboten werden.

Es ist nicht nur möglich, einzelne Prozessobjekte 2, 5 von dem ersten Teilwerkzeug 1 an das zweite Teilwerkzeug 6 zu übergeben. Vielmehr kann der Projekteur auch eine Vielzahl von Prozessobjekten 2, 5 zur Übergabe selektieren.

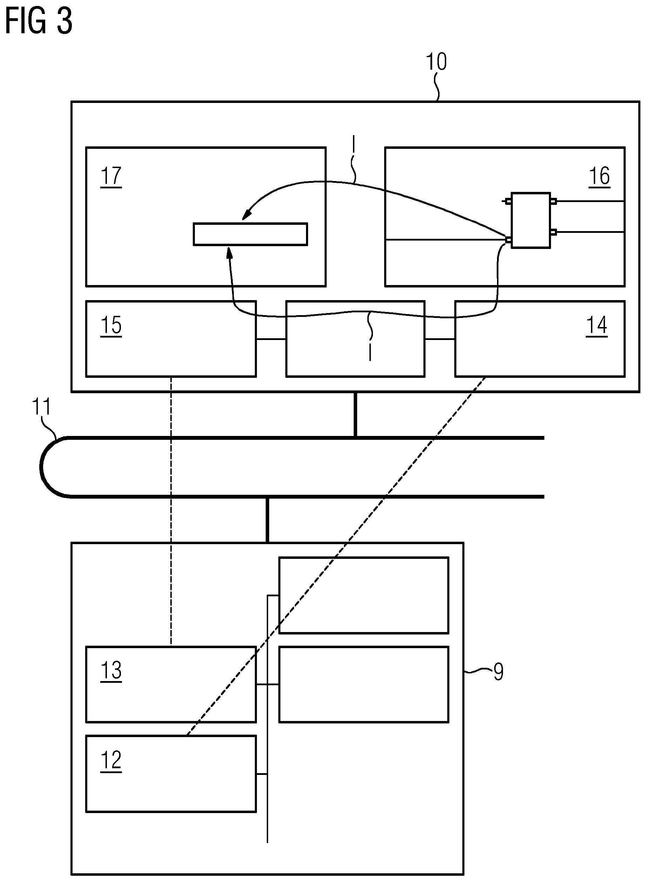

In FIG 3 ist ein Engineering Station Server 9 und ein Engineering Station Client 10 eines Leitsystems einer als Prozessanlage, d.h. als verfahrenstechnische Anlage, ausgebildeten technischen Anlage dargestellt. Der Engineering Station Server 9 und der Engineering Station Client 10 sind über einen Terminalbus 11 miteinander und optional mit nicht dargestellten weiteren Komponenten des Leitsystems 1 wie einem Prozessdatenarchiv oder einem Operator Station Server verbunden.

Ein Projekteur kann über den Engineering Station Client 10 mittels des Terminalbus 11 auf den Engineering Station Server 9 zugreifen. Der Terminalbus 11 kann, ohne sich darauf zu beschränken, beispielsweise als Industrial Ethernet ausgebildet sein.

Auf dem Engineering Station Server 9 ist ein Projektierungswerkzeug mit einem ersten Teilwerkzeug 12 und einem zweiten Teilwerkzeug 13 computerimplementiert. Auf dem Engineering Station Client 10 werden durch Visualisierungsdienste 14, 15 entsprechende Nutzeroberflächen 16, 17 für die beiden Teilwerkzeuge 12, 13 dargestellt, um dem Projekteur eine Nutzung der Teilwerkzeuge 12, 13 zu ermöglichen.

Durch eine Verschiebeoperation I können in dem ersten Teilwerkzeug 12 automatisierte Prozessobjekte an das zweite Teilwerkzeug 13 übergeben werden (was entsprechend auf den Nutzeroberflächen 16, 17 visualisiert wird). Hierdurch kann die zuvor erläuterte vorteilhafte Funktionalität erzielt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Computerimplementiertes Projektierungswerkzeug für eine Projektierung einer Mehrzahl von Prozesskomponenten einer Prozessanlage, das ein erstes Teilwerkzeug (1) und ein zweites Teilwerkzeug (6) umfasst,
wobei das erste Teilwerkzeug (1) zur Erzeugung einer Automatisierung der Mehrzahl von Prozesskomponenten für die Prozessanlage ausgebildet ist, wobei das erste Teilwerkzeug (1) dazu ausgebildet ist, im Rahmen der Erzeugung der Automatisierung jeder Prozesskomponente eine Parametrierung und eine Interaktion mit weiteren Prozesskomponenten zuzuweisen,
und wobei das zweite Teilwerkzeug (6) zur Erzeugung einer Bedienung und Beobachtung für die Mehrzahl von Prozesskomponenten der Prozessanlage ausgebildet ist,
**dadurch gekennzeichnet, dass**
das computerimplementierte Projektierungswerkzeug dazu ausgebildet ist, eine durch das erste Teilwerkzeug (1) automatisierte Prozesskomponente mit deren Parametrierung und deren Interaktion mit weiteren Prozesskomponenten dem zweiten Teilwerkzeug (6) derart zur Verfügung zu stellen, dass das zweite Teilwerkzeug (6) keine Anpassungen an der automatisierten Prozesskomponente vornehmen muss, um sie in die zu erzeugende Bedienung und Beobachtung der Mehrzahl von Prozesskomponenten der Prozessanlage zu integrieren,
wobei das computerimplementierte Projektierungswerkzeug dazu ausgebildet ist, die automatisierte Prozesskomponente im Rahmen der Erzeugung der Automatisierung durch eine durch einen Projekteur der Prozessanlage triggerbare Verschiebeoperation, die eine grafische Ziehbewegung oder eine Kopieren- und Einfügen-Operation darstellt, dem zweiten Teilwerkzeug (6) zur Verfügung zu stellen,
und wobei das computerimplementierte Projektierungswerkzeug dazu ausgebildet ist, die erzeugte Bedienung und Beobachtung an einen Operator Station Client eines Operator Station Servers der Prozessanlage zu übermitteln, wobei auf Grundlage der zuvor erzeugten Bedienung und Beobachtung eine visuelle Darstellung der Bedienung und Beobachtung durch den Operator Station Client erfolgen kann.

2. Computerimplementiertes Projektierungswerkzeug nach Anspruch 1, bei dem das zweite Teilwerkzeug (6) dazu ausgebildet ist, dem Projekteur der Prozessanlage bei einer Übernahme der automatisierten Prozesskomponente eine Auswahloption darzubieten, derart, dass eine Ausprägung der automatisierten Prozesskomponente für die Bedienung und Beobachtung aus einer Mehrzahl von Möglichkeiten durch den Projekteur auswählbar ist.

3. Engineering Station Server (9) für ein Leitsystem einer Prozessanlage, auf dem ein Projektierungswerkzeug gemäß einem der vorangegangenen Ansprüche computerimplementiert ist.

4. Ein erster Engineering Station Server (9) und ein zweiter Engineering Station Server, jeweils für ein Leitsystem einer Prozessanlage, auf denen ein Projektierungswerkzeug gemäß einem der Ansprüche 1 oder 2 computerimplementiert ist, wobei das erste Teilwerkzeug (1) des Projektierungswerkzeugs auf dem ersten Engineering Station Server (9) und das zweite Teilwerkzeug (6) auf dem zweiten Engineering Station Server computerimplementiert sind.

5. Leitsystem für eine Prozessanlage, das einen Engineering Station Server (9) gemäß Anspruch 3 oder zwei Engineering Station Server (9) gemäß Anspruch 4, und wenigstens eine Operator Station Server umfasst, wobei der Operator Station Server dazu ausgebildet ist, ein von dem auf dem Engineering Station Server oder den auf den beiden Engineering Station Servern computerimplementierten Projektierungswerkzeug erstellte Bedienung und Beobachtung der Prozessanlage zur visuellen Darstellung an wenigstens einen Operator Station Client zu übermitteln.

6. Verfahren zur Darstellung einer Bedienung und Beobachtung einer Prozessanlage durch ein computerimplementiertes Projektierungswerkzeug, welches auf einem Engineering Station Server implementiert ist, umfassend:
a) Erzeugung einer Automatisierung für eine Mehrzahl von Prozesskomponenten für die Prozessanlage durch ein erstes Teilwerkzeug (1) des computerimplementierten Projektierungswerkzeug, wobei das erste Teilwerkzeug (1) im Rahmen der Erzeugung der Automatisierung jeder Prozesskomponente eine Parametrierung und eine Interaktion mit weiteren Prozesskomponenten zuweist,
b) Zurverfügungstellung der automatisierten Prozesskomponente mit deren Parametrierung und deren Interaktion mit weiteren Prozesskomponenten für ein zweites Teilwerkzeug (6) des computerimplementierten Projektierungswerkzeug durch das erste Teilwerkzeug (1),
c) Erzeugung einer Bedienung und Beobachtung für die Mehrzahl von Prozesskomponenten der Prozessanlage durch das zweite Teilwerkzeug (6) auf Basis der von dem ersten Teilwerkzeug (1) erhaltenen automatisierten Prozesskomponenten,
d) Übermitteln der erzeugten Bedienung und Beobachtung an einen Operator Station Client eines Operator Station Servers der Prozessanlage auf Grundlage der zuvor erzeugten Bedienung und Beobachtung und visuelle Darstellung der Bedienung und Beobachtung durch den Operator Station Client,
**dadurch gekennzeichnet, dass**
das erste Teilwerkzeug (1) die automatisierte Prozesskomponente mit deren Parametrierung und deren Interaktion mit weiteren Prozesskomponenten dem zweiten Teilwerkzeug (6) jeweils derart zur Verfügung stellt, dass das zweite Teilwerkzeug (6) keine Anpassungen an der automatisierten Prozesskomponente vornehmen muss, um sie in die Bedienung und Beobachtung der Mehrzahl von Prozesskomponenten der Prozessanlage zu integrieren,
wobei die automatisierte Prozesskomponente dem zweiten Teilwerkzeug (6) durch eine durch einen Projekteur der Prozessanlage triggerbare Verschiebeoperation, die eine grafische Ziehbewegung oder eine Kopieren- und Einfügen-Operation darstellt, zur Verfügung gestellt wird.

7. Verfahren nach Anspruch 6, bei dem das zweite Teilwerkzeug (6) dem Projekteur der Prozessanlage bei einer Übernahme der automatisierten Prozesskomponente eine Auswahloption darbietet, derart, dass eine Ausprägung der automatisierten Prozesskomponente für die Bedienung und Beobachtung aus einer Mehrzahl von Möglichkeiten durch den Projekteur auswählbar ist.

## Claims

1. Computer-implemented configuration tool for configuring a plurality of process components of a process plant comprising a first tool component (1) and a second tool component (6), wherein the first tool component (1) is embodied to generate automation of the plurality of process components for the process plant, wherein the first tool component (1) is embodied to assign parameterisation and interaction with further process components to each process component in the context of the generation of the automation,
and wherein the second tool component (6) is embodied to generate operator control and monitoring for the plurality of process components of the process plant,
**characterised in that**
the computer-implemented configuration tool is embodied to provide the second tool component (6) with a process component automated by the first tool component (1), along with its parameterisation and its interaction with further process components, in such a way that the second tool component (6) does not have to make any adjustments to the automated process component in order to integrate it into the operator control and monitoring to be generated of the plurality of process components of the process plant,
wherein the computer-implemented configuration tool is embodied, in the context of the generation of the automation, to provide the second tool component (6) with the automated process component by a displacement operation that can be triggered by a project engineer of the process plant and represents a graphical dragging movement or a copy and paste operation,
and wherein the computer-implemented configuration tool is embodied to transmit the generated operator control and monitoring to an operator station client of an operator station server of the process plant, wherein a visual display of the operator control and monitoring can take place by way of the operator station client based on the previously generated operator control and monitoring.

2. Computer-implemented configuration tool according to claim 1, in which the second tool component (6) is embodied to offer the project engineer of the process plant a selection option on acceptance of the automated process component in such a way that the project engineer can select a manifestation of the automated process component for the operator control and monitoring from a plurality of options.

3. Engineering station server (9) for a control system of a process plant on which a configuration tool according to one of the preceding claims is computer-implemented.

4. First engineering station server (9) and second engineering station server, in each case for a control system of a process plant, on which a configuration tool according to one of claims 1 or 2 is computer-implemented, wherein the first tool component (1) of the configuration tool is computer-implemented on the first engineering station server (9) and the second tool component (6) is computer-implemented on the second engineering station server.

5. Control system for a process plant comprising an engineering station server (9) according to claim 3 or two engineering station servers (9) according to claim 4, and at least one operator station server, wherein the operator station server is embodied to transmit operator control and monitoring of the process plant created by the computer-implemented configuration tool on the engineering station server or the two engineering station servers to at least one operator station client for visual display.

6. Method for displaying operator control and monitoring of a process plant by way of a computer-implemented configuration tool, which is implemented on an engineering station server, comprising:
a) generating automation for a plurality of process components for the process plant by a first tool component (1) of the computer-implemented configuration tool, wherein the first tool component (1) assigns parameterisation and interaction with further process components to each process component in the context of the generation of the automation,
b) provision of the automated process component, along with its parameterisation and its interaction with further process components, for a second tool component (6) of the computer-implemented configuration tool by the first tool component (1),
c) generating operator control and monitoring for the plurality of process components of the process plant by the second tool component (6) based on the automated process components obtained from the first tool component (1),
d) transmitting the generated operator control and monitoring to an operator station client of an operator station server of the process plant based on the previously generated operator control and monitoring and visual display of the operator control and monitoring by way of the operator station client,
**characterised in that**
the first tool component (1) in each case provides the second tool component (6) with the automated process component, along with its parameterisation and its interaction with further process components, in such a way that the second tool component (6) does not have to make any adjustments to the automated process component in order to integrate it into the operator control and monitoring of the plurality of process components of the process plant,
wherein the automated process component is provided to the second tool component (6) by a displacement operation that can be triggered by a project engineer of the process plant and represents a graphical dragging movement or a copy and paste operation.

7. Method according to claim 6, in which the second tool component (6) offers the project engineer of the process plant a selection option on acceptance of the automated process component in such a way that the project engineer can select an embodiment of the automated process component for the operator control and monitoring from a plurality of options.

## Revendications

1. Outil de planification mis en œuvre par ordinateur pour la planification d'une pluralité de composants d'une installation de processus, qui comprend un premier outil (1) partiel et un deuxième outil (6) partiel,
dans lequel le premier outil (1) partiel est constitué pour la production d'une automatisation de la pluralité de composants de processus pour l'installation de processus, dans lequel le premier outil (1) partiel est constitué pour, dans le cadre de la production de l'automatisation, attribuer à chaque composant de processus un paramétrage et une interaction avec d'autres composants de processus,
et dans lequel le deuxième outil (6) partiel est constitué pour la production d'une commande et d'une observation pour la pluralité de composants de processus de l'installation de processus,
**caractérisé en ce que**
l'outil de planification mis en œuvre par ordinateur est constitué pour mettre à disposition du deuxième outil (6) partiel un composant de processus automatisé par le premier outil (1) partiel avec son paramétrage et son interaction avec d'autres composants de processus, de manière à ce que le deuxième outil (6) partiel n'ait pas à effectuer une adaptation aux composants de processus automatisés, afin de les intégrer dans la commande et l'observation produite de la pluralité de composants de processus de l'installation de processus,
dans lequel l'outil de planification mis en œuvre par ordinateur est constitué pour mettre à disposition du deuxième outil (6) partiel le composant de processus automatisé, dans le cadre de la production de l'automatisation, par une opération de déplacement pouvant être déclenchée par un planificateur de l'installation de processus, opération qui représente un mouvement de déplacement graphique ou une opération de copiage et d'insertion,
et dans lequel l'outil de planification mis en œuvre par ordinateur est constitué pour transmettre la commande et l'observation produite à un operator station client d'un operator station server de l'installation de processus, dans lequel, sur la base de la commande et de l'observation produite auparavant, une représentation visuelle de la commande et de l'observation peut être effectuée par l'operator station client.

2. Outil de planification mis en œuvre par ordinateur suivant la revendication 1, dans lequel le deuxième outil (6) partiel est constitué pour offrir au planificateur de l'installation de processus, lors d'une prise en charge du composant de processus automatisé, une option de choix, de manière à ce qu'une application du composant de processus automatisé pour la commande et l'observation puisse être choisie par le planificateur dans une pluralité de possibilités.

3. Engineering station server (9) d'un système de conduite d'une installation de processus, sur lequel un outil de planification suivant l'une des revendications précédentes est mis en œuvre par ordinateur.

4. Un premier engineering station server (9) et un deuxième engineering station server, respectivement pour un système de conduite d'une installation de processus, sur lesquels un outil de planification suivant l'une des revendications 1 ou 2 est mis en œuvre par ordinateur, dans lequel le premier outil (1) partiel de l'outil de planification est mis en œuvre par ordinateur sur le premier engineering station server (9) et le deuxième outil (6) partiel est mis en œuvre par ordinateur sur le deuxième engineering station server.

5. Système de conduite d'une installation de processus, qui comprend un engineering station server (9) suivant la revendication 3 ou deux engineering station server (9) suivant la revendication 4, et au moins un operator station server, dans lequel l'operator station server est constitué pour transmettre à au moins un operator station client pour la représentation visuelle une commande et une observation de l'installation de processus établie par l'outil de planification mis en œuvre par ordinateur sur l'engineering station server ou sur les deux engineering station server.

6. Procédé de représentation d'une commande et d'une observation d'une installation de processus par un outil de planification mis en œuvre par ordinateur, qui est mis en œuvre sur un engineering station server, comprenant :
a) production d'une automatisation pour une pluralité de composants de processus pour l'installation de processus par un premier outil (1) partiel de l'outil de planification mis en œuvre par ordinateur, dans lequel le premier outil (1) partiel attribue, dans le cadre de la production de l'automatisation, à chaque composant de processus un paramétrage et une interaction avec d'autres composants de processus,
b) mise, par le premier outil (1) partiel, du composant de processus automatisé avec son paramétrage et son interaction avec d'autres composants de processus, à disposition d'un deuxième outil (6) partiel de l'outil de planification mis en œuvre par ordinateur,
c) production d'une commande et d'une observation pour la pluralité de composants de processus de l'installation de processus par le deuxième outil (6) partiel sur la base des composants de processus automatisés obtenus par le premier outil (1) partiel,
d) transmission de la commande et de l'observation produite à un operator station client d'un operator station server de l'installation de processus sur la base de la commande et de l'observation produite auparavant et représentation visuelle de la commande et de l'observation par l'operator station client,
**caractérisé en ce que**
le premier outil (1) partiel met le composant de processus automatisé avec son paramétrage et son interaction avec d'autres composants de processus à disposition du deuxième outil (6) partiel respectivement, de manière à ce que le deuxième outil (6) partiel n'ait pas à effectuer d'adaptation aux composants de processus automatisés, afin de les intégrer dans la commande et l'observation de la pluralité de composants de processus de l'installation de processus,
dans lequel le composant de processus automatisé est mis à disposition du deuxième outil (6) partiel par une opération de déplacement pouvant être déclenchée par un planificateur de l'installation de processus, opération qui représente un mouvement de déplacement graphique ou une opération de copie et d'insertion.

7. Procédé suivant la revendication 6, dans lequel le deuxième outil (6) partiel donne au planificateur de l'installation de processus, lors d'une prise en charge du composant de processus automatisé, une option de choix, de manière à ce qu'une application du composant de processus automatisé pour la commande et l'observation puisse être choisie par le planificateur dans une pluralité de possibilités.
